# EUROPEAN PATENT SPECIFICATION

(11) **EP 4 168 134 B1**
(45) Date of publication and mention of the grant of the patent: **20.11.2024**
(21) Application number: 20941929.0
(22) Date of filing: 23.06.2020
(51) Int. Cl.: A62D 3/36, B01J 10/00, C02F 1/66, C21B 13/00, C02F 103/18

(54) **SEAL GAS OPTIMIZATION SYSTEMS AND METHODS FOR A DIRECT REDUCTION PROCESS**
DICHTUNGSGASOPTIMIERUNGSSYSTEME UND VERFAHREN FÜR EINEN DIREKTREDUKTIONSPROZESS
SYSTÈMES D'OPTIMISATION DE GAZ D'ÉTANCHÉITÉ ET PROCÉDÉS POUR UN PROCÉDÉ DE RÉDUCTION DIRECTE

(43) Date of publication of application: 26.04.2023
(73) Proprietor: Midrex Technologies, Inc., Charlotte, North Carolina 28208 (US)
(72) Inventor: FINNOUCHE, Faycal, Charlotte, NC 28208 (US); OSWALD, David, Charlotte, NC 28208 (US)
(74) Representative: dompatent von Kreisler Selting Werner - Partnerschaft von Patent- und Rechtsanwälten mbB
(86) International application number: PCT/US2020/039042
(87) International publication number: WO 2021/262145

(56) References cited:
- WO-A1-2019/225256
- US-A- 3 899 294
- US-A- 4 698 219
- US-A- 5 230 810
- US-A- 5 447 551
- US-A1- 2015 329 930
- US-B2- 9 108 869

## Description

### TECHNICAL FIELD

The present disclosure relates generally to systems and methods for the production of direct reduced iron (DRI) or the like. More particularly, the present disclosure relates to seal gas optimization systems and methods for a direct reduction (DR) process.

### BACKGROUND

An important component of a DR process, such as the MIDREX DRI process, is the seal gas system, and the seal gas compressor as part of the seal gas system. Seal gas - derived from spent reformer flue gas - is used to protect the plant from explosive gases and enables the DR process to work effectively because atmospheric air is excluded from the reduction process. Optimizing the operation of the seal gas compressor and minimizing problems therewith enables optimum productivity and product quality/

The general problem for seal gas compressor management is that the incoming feed water stream is impacted by the composition of the reformer flue gas. Generally, the feed water used in the seal gas compressor is softened, clean industrial or reverse osmosis (RO) water. An abbreviated makeup analysis for such water is provided in Table 1 below.

**Table 1 - Abbreviated Water Chemistries**

| Parameter | Unit | Raw Water | Soft Water | RO Water |
|---|---|---|---|---|
| pH | - | 7.0-9.0 | 8.0-9.0 | 5.0-7.0 |
| Conductivity | µS/m | 462 | - | - |
| Total suspended solids (TSS) | mg/l | 1 | < 1 | < 1 |
| Total dissolved solids (TDS) | mg/l | 320 | - | < 25 |
| Oil and grease | mg/l | 1 | ND | ND |
| Total hardness | mg/l CaCO₃ | 160 | < 20 | < 10 |
| Calcium hardness | mg/l CaCO₃ | < 35 | < 10 | < 5 |
| Magnesium hardness | mg/l CaCO₃ | < 50 | < 10 | < 5 |
| M alkalinity (TAC) | mg/l CaCO₃ | 35 | Set by vendor based upon treatment | < 5 |

Regardless of the water source, the CO₂ in the reformer flue gas mixes with the make-up water stream and forms carbonic acid as follows:

CO₂ (aq) + H₂O ←→ H₂CO₃(aq) (1)

This is a weak acid, so some of it dissociates to produce H+ ions (see below), hence the incoming water stream to the compressor is acidic. The pH could be as low as 4.5.

H₂CO₃(aq) → H⁺(aq) + HCO₃⁻(aq) (2)

HCO₃⁻(aq) → H⁺(aq) + CO₃⁻²(aq) (3)

At this depressed water pH, the corrosion rate for the carbon steel and cast iron components becomes great. Without chemical adjustment to the water, the life of the equipment is greatly reduced.

A secondary concern if clean industrial water is used (and, to a lesser extent, if softened water is used) is the potential scaling that occurs due to the following reaction:

CaO + H₂O → Ca(OH)₂ (4)

Ca(OH)₂ + CO₂ → CaCO₃↓ + H₂O (5)

In this reaction, as the heat of compression occurs, the precipitation of calcium carbonate increases because the solubility of calcium carbonate is inverse to temperature. Based upon the water chemistry (i.e., the calcium ions) and the pH adjustment chemical, scaling potential can vary, but can be significant.

Both of these issues are ongoing concerns within DRI plants that use lobe compressors because the existing treatments and monitoring systems have not fully eliminated the problems. Within the design of conventional DRI plants, no comprehensive solution to these problems has been developed. Typically, licensees and water treatment suppliers have offered some degree of problem avoidance, discussed below, but there is not a comprehensive resolution of the above reactions with the current state of equipment and process control. Due to these limitations, corrosion and scaling can result in the following:
1) Reduced production,
2) Excessive maintenance and repair requirements of the compressor or lobe components, the wet seal gas system, and the seal gas dryer,
3) Downstream deposition that hinders production rates,
4) Loss of product quality: re-oxidation of the metalized product, and/or
5) Indirectly, the occurrence of severe clustering in the furnace, increasing downtime for removing it.

Caustic feed solutions have the desired outcome of adjusting the pH, but result in excessive feed scaling and under-feed corrosion, which is controlled by a dosing pump and optional timer. No real measurement method is available and the practical outcome is inconsistent performance and consistent field checks to ensure that the system is working properly.

Corrosion inhibitor solutions have the desired outcome of reducing seal gas compressor corrosion, but provide inconsistent chemical feed or effectiveness because the pH is often incorrect, which is again controlled by a dosing pump and optional timer. Coupons provide lagging indicators and a corrater provides a real time indicator and the practical outcome is a lack or real time decision making and potential corrater failure.

Alternative metallurgical lobe material (stainless steel and nickel) solutions have the desired outcome of providing improved lobe performance and longer equipment life, but are expensive. Lobe life is improved, but corrosive water still affects the pipework utilized.

This background provides a general context and environment in which the concepts of the present disclosure may be implemented. It will be readily apparent to those of ordinary skill in the art that these concepts may be practiced in other contexts and environments equally. Thus, this background is illustrative only. Patent documents WO 2019/225256 A1 and US 5 447 551 A also disclose a system for operating a seal gas compressor utilized in a direct reduction process.

### SUMMARY

The present disclosure provides systems and methods that incorporate control measurement and chemical feed adjustment to ensure critical parameters such that the seal gas compressor (SGC) process water system can be managed, as disclosed in appended claims 1-11. In doing so, critical system variables can be controlled and the current limitations with existing equipment/treatments are overcome. In achieving these results, the process reliability of the SCG is improved.

An overview of the parameters controlled in the present disclosure is as follows:
1) Incoming water pH is controlled to a desired pH range of 7.8-9.0 continuously utilizing probes and feed forward logic from the Distributed Control System (DCS) and chemical feed pumps,
2) Discharge water pH is controlled, ensuring that the discharge pH range is in a range that minimizes scaling and corrosion and ensures that the optimal effectiveness of corrosion and scaling inhibition chemicals is achieved,
3) Chemical feed does not rely on one family of chemistry, but includes film forming, vapor phases and electrochemical treatments to optimize system wide corrosion control in both the water and gaseous vapor regions of the process,
4) Effective performance metric ranges (e.g., pH and corrosion rates) are established in the DCS and adjustments to chemical feed control are directed by these median set points, so that upper and lower control rates are controlled, and
5) Minor modifications to process water drains are accomplished to enable effective water monitoring.

In the present claimed invention, a method for operating a seal gas compressor utilized in a direct reduction process includes: monitoring a pH level of a water stream used in the seal gas compressor, wherein the pH level of the water stream is affected by a reformer flue gas stream that comes into contact with the water stream, wherein the monitoring step is carried out one or more of upstream of the seal gas compressor and downstream of the compressor; and adjusting the pH level of the water stream to maintain the pH level of the water stream within a predetermined range based on feedback from the monitoring step. The method may include maintaining the pH level of the water stream upstream of the seal gas compressor in a range between 7.5 and 10. The method includes maintaining the pH level of the water stream downstream of the seal gas compressor in a range between 7.8 and 9.5. Adjusting the pH level of the water stream includes injecting a pH adjusting chemical into the water stream based on the feedback from the monitoring step. The method further includes: monitoring a corrosiveness of the water stream used in the seal gas compressor, wherein the corrosiveness of the water stream is affected by the reformer flue gas stream that comes into contact with the water stream, and adjusting the corrosiveness of the water stream to maintain the corrosiveness of the water stream within a predetermined range based on feedback from the monitoring step. The method may further include maintaining the corrosiveness of the water stream in a range under 0.050 mm per year (2.0 mpy).

In the claimed invention, a system for operating a seal gas compressor utilized in a direct reduction process includes: a Distributed Control System; one or more pH probes coupled to the Distributed Control System and operable for monitoring a pH level of a water stream used in the seal gas compressor, wherein the pH level of the water stream is affected by a reformer flue gas stream that comes into contact with the water stream, wherein the monitoring is carried out one or more of upstream of the seal gas compressor and downstream of the compressor; and a pH adjusting chemical injector coupled to the Distributed Control System and operable for adjusting the pH level of the water stream to maintain the pH level of the water stream within a predetermined range based on feedback from the one or more pH probes at the direction of the Distributed Control System. The system may maintain the pH level of the water stream upstream of the seal gas compressor in a range between 7.5 and 10. The system may maintain the pH level of the water stream downstream of the seal gas compressor in a range between 7.8 and 9.5. The system may further include: a corrater probe coupled to the Distributed Control System and operable for monitoring a corrosiveness of the water stream used in the seal gas compressor, wherein the corrosiveness of the water stream is affected by the reformer flue gas stream that comes into contact with the water stream, and a corrosiveness chemical injector coupled to the Distributed Control System and operable for adjusting the corrosiveness of the water stream to maintain the corrosiveness of the water stream within a predetermined range based on feedback from the monitoring step. The system may further maintain the corrosiveness of the water stream in a range under 0.050 mm per year (2.0 mpy). The corrosiveness chemical injector is operable for delivering one or more of a film forming, vapor phase, and electrochemical treatment to the water stream. Optionally, one of the one or more pH probes is collocated with the corrater probe.

In the claimed invention, a direct reduction system includes: a furnace; a seal gas compressor operable for delivering seal gas to the furnace; a reformer operable for delivering a reformer flue gas stream to the seal gas compressor; a Distributed Control System; one or more pH probes coupled to the Distributed Control System and operable for monitoring a pH level of a water stream used in the seal gas compressor, wherein the pH level of the water stream is affected by the reformer flue gas stream that comes into contact with the water stream, wherein the monitoring is carried out one or more of upstream of the seal gas compressor and downstream of the compressor; and a pH adjusting chemical injector coupled to the Distributed Control System and operable for adjusting the pH level of the water stream to maintain the pH level of the water stream within a predetermined range based on feedback from the one or more pH probes at the direction of the Distributed Control System. The direct reduction system may maintain the pH level of the water stream upstream of the seal gas compressor in a range between 7.5 and 10. The direct reduction system may maintain the pH level of the water stream downstream of the seal gas compressor in a range between 7.8 and 9.5. The direct reduction system may further include: a corrater probe coupled to the Distributed Control System and operable for monitoring a corrosiveness of the water stream used in the seal gas compressor, wherein the corrosiveness of the water stream is affected by the reformer flue gas stream that comes into contact with the water stream, and a corrosiveness chemical injector coupled to the Distributed Control System and operable for adjusting the corrosiveness of the water stream to maintain the corrosiveness of the water stream within a predetermined range based on feedback from the monitoring step. The direct reduction system may further maintain the corrosiveness of the water stream in a range under 0.050 mm per year (2.0 mpy). The corrosiveness chemical injector can be operable for delivering one or more of a film forming, vapor phase, and electrochemical treatment to the water stream. Optionally, one of the one or more pH probes is collocated with the corrater probe.

### BRIEF DESCRIPTION OF THE DRAWINGS

The present disclosure is illustrated and described herein with reference to the various drawings, in which like reference numbers are used to denote like system components/methods steps, as appropriate, and in which:
FIG. 1 is a schematic diagram illustrating one exemplary embodiment of the seal gas optimization system of the present disclosure;
FIG. 2 is a schematic diagram illustrating another exemplary embodiment of the seal gas optimization system of the present disclosure; and
FIG. 3 is a schematic diagram illustrating a further exemplary embodiment of the seal gas optimization system of the present disclosure.

### DESCRIPTION OF EMBODIMENTS

Central to a DRI process is the seal gas system. The seal gas system protects both personnel and equipment from toxic gases and potential fires and explosions. The seal gas is used to exclude the flammable reducing gases (H2 and CO) from the atmosphere, thereby enabling the reaction of iron ore to be converted to metallic iron and protecting the environment outside the associated furnace. Additionally, the seal gas prevents the atmosphere from entering the furnace, which would inhibit the metallic reduction process.

The source of the seal gas is primarily flue gas from the reformer - which includes the byproducts of combustion. The make-up of the flue gas is typically:

CO₂ - 15-18% (6)

H₂O - 20-22% (7)

N₂ - 60-65% (8)

O₂ - < 2% (9)

Other inert gases could be substituted - for example, a greater percentage of nitrogen, but flue gas is normally vented to atmosphere and is therefore an available and inexpensive source for the seal process.

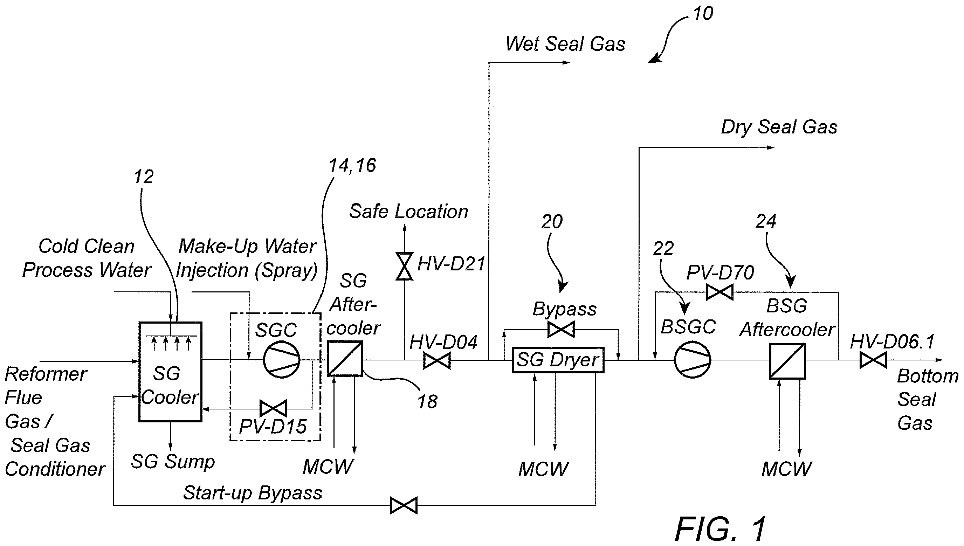

Referring now specifically to FIG. 1, in one illustrative embodiment of the seal gas system 10 of the present disclosure, spent reformer flue gas and, optionally, seal gas conditioner are cooled from ~1000°C to 40°C in a seal gas cooler 12 and then enter the seal gas compressor 14, followed by a pulsation dampener 16. Following the pulsation dampener 16, the seal gas goes through a seal gas aftercooler 18 before being segmented into three streams - wet seal gas, dry seal gas, and bottom seal gas. The dry seal gas is distinguished from the wet seal gas in that the dry seal gas is passed through a seal gas dryer 20 (optionally with a bypass), while the bottom seal gas is further passed through a bottom seal gas compressor 22 and a bottom seal gas aftercooler 24. The water delivered to the seal gas compressor 14 includes cold, clean process water and make-up water (which may be spray injected subsequent to the seal gas cooler 12).

The general problem for seal gas compressor management is that the incoming feed water stream is impacted by the composition of the reformer flue gas. Generally the feed water used in the seal gas compressor is softened, clean industrial or RO water. The typical make-up analysis for this water is provided in Table 2 below.

**Table 2 - Full Water Chemistries**

| Parameter | Unit | Raw Water | Soft Water | RO Water |
|---|---|---|---|---|
| pH | - | 7.0-9.0 | 8.0-9.0 | 5.0-7.0 |
| Conductivity | µS/m | 462 | - | - |
| Total suspended solids (TSS) | mg/l | 1 | < 1 | < 1 |
| Total dissolved solids (TDS) | mg/l | 320 | - | < 25 |
| Oil and grease | mg/l | 1 | ND | ND |
| Total hardness | mg/l CaCO₃ | 160 | < 20 | < 10 |
| Calcium hardness | mg/l CaCO₃ | < 35 | < 10 | < 5 |
| Magnesium hardness | mg/l CaCO₃ | < 50 | < 10 | < 5 |
| M alkalinity (TAC) | mg/l CaCO₃ | 35 | Set by vendor based upon treatment | < 5 |
| Chlorides | mg/l Cl⁻ | 60 | < 60 | < 5 |
| Sulphates | mg/l SO₄ | 130 | < 100 | < 5 |
| Nitrates | mg/l NO₃ | 5 | < 5 | < 5 |
| Sodium and potassium | mg/l Na | 43 | 113/ < 3 | < 5 / < 2 |
| Total iron | mg/l Fe | 0.1 | < 0.1 | < 0.1 |
| Manganese | mg/l Fe | 0.05 | - | - |
| Silica | mg/l SiO₂ | 10 | ND | ND |
| Turbidity, NTU | | < 2 | < 2 | < 1 |
| TOC | ppm | 2 | - | < 5 |

Regardless of the make-up water source, the CO₂ in the flue gas mixes with the make-up water stream and forms carbonic acid as follows:

CO₂(aq) + H₂O ←→ H₂CO₃(aq) (10)

This is a weak acid, so some of it dissociates to produce H+ ions (see below), hence the incoming water stream to the seal gas compressor 14 is acidic. The pH could be as low as 4.5.

H₂CO₃(aq) - H⁺(aq) + HCO₃⁻(aq) (11)

HCO₃⁻(aq) → H⁺(aq) + CO₃⁻²(aq) (12)

At this depressed water pH, the corrosion rate for the carbon steel and cast iron components is great. Without chemical adjustment to the water, the life of the equipment is greatly reduced.

A secondary concern if clean industrial water is used (and to a lesser extent if softened water is used) is the potential scaling that occurs due to the following reaction:

CaO + H₂O → Ca(OH)₂ (13)

Ca(OH)₂ + CO₂ → CaCO₃↓ + H₂O (14)

In this reaction, as the heat of compression occurs, the precipitation of calcium carbonate increases because the solubility of calcium carbonate is inverse to temperature. Based upon the water chemistry (i.e., the calcium ions) and the pH adjustment chemical, scaling potential varies, but can be significant.

Both of these issues are ongoing concerns within DRI plants that use lobe compressors because the existing treatments and monitoring systems have not fully eliminated the aforementioned problems. Within the design of conventional DRI plants, no comprehensive solution to these problems has been developed. Typically, licensees and water treatment suppliers have offered some degree of problem avoidance, discussed below, but there is not a comprehensive resolution of the above reactions with the current state of equipment and process control. Due to these limitations, corrosion and scaling can result in the following:
1) Reduced production,
2) Excessive maintenance and repair requirements of the compressor or lobe components, the wet seal gas system, and the seal gas dryer 20,
3) Downstream deposition that hinders production rates,
4) Loss of product quality: re-oxidation of the metalized product, and/or
5) Indirectly, the occurrence of severe clustering in the furnace, increasing downtime for removing it.

Buffering feed solutions have the desired outcome of adjusting the pH out of the corrosion range between 7.5 and 9.0, but result in excessive feed scaling and under-feed corrosion, which is controlled by a dosing pump and optional timer. Excessive feeding can cause too high a pH (> 10.0) and result in scaling of the lobes and caustic buildup downstream of the seal gas compressor 14, with under-feeding (pH < 7.0) simply allowing corrosion problems to continue. No real measurement method is available in the applicable environment and the practical outcome is inconsistent performance and consistent field checks to ensure that the system is working properly. It is not currently possible to monitor discharge water pH, resulting in inconsistent performance, no real time data to make decisions, and the requirement for frequent manual system checks.

Corrosion inhibitor solutions have the desired outcome of reducing seal gas compressor corrosion by providing electrochemical protection of the compressor parts and lobes with water treatment chemicals, but provide inconsistent chemical feed or effectiveness because the pH is often incorrect, which is again controlled by a dosing pump and optional timer. If the pH control is not working properly, the chemical control is less effective because the chemicals used have effective and ineffective pH ranges. Performance is based upon levels of active chemistry in the water, and the chemicals do not protect downstream, where gaseous vapors carry moisture and film formers and vapor phase inhibitors are needed. Coupons provide lagging indicators and a corrater provides a real time indicator and the practical outcome is a lack or real time decision making and potential corrater failure if scaling in the system occurs.

Alternative metallurgical lobe material (stainless steel and nickel) solutions have the desired outcome of providing improved lobe performance and longer equipment life, but are expensive. Lobe life is improved, but corrosive water still affects the pipework utilized.

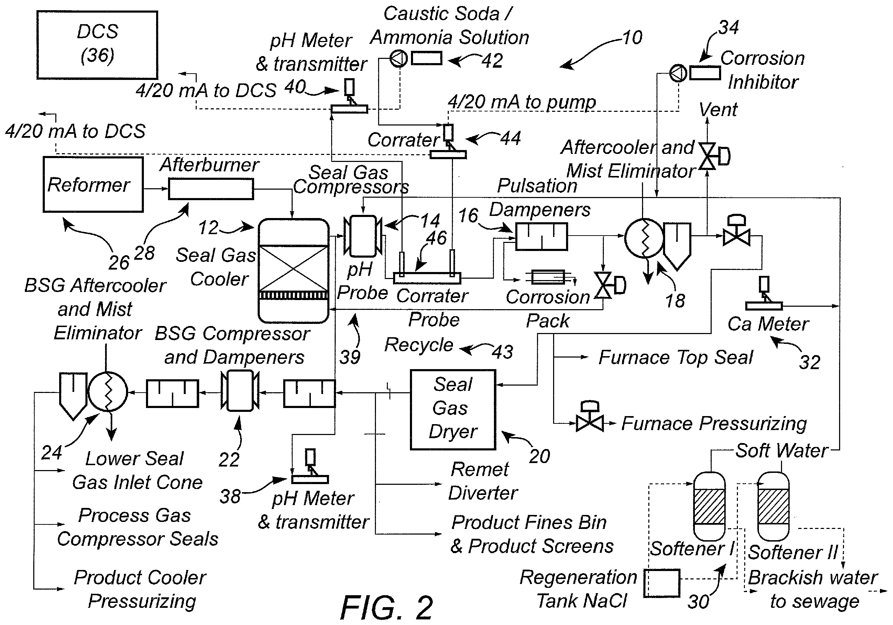

Referring now specifically to FIG. 2, in another illustrative embodiment of the seal gas system 10 of the present disclosure, spent reformer flue gas from a reformer 26 and afterburner 28 and, optionally, seal gas conditioner are cooled from ~ 1000°C to 40°C in the seal gas cooler 12 and then enter the seal gas compressor 14, followed by the pulsation dampeners 16. Following the pulsation dampeners 16, the seal gas goes through the seal gas aftercooler 18 before being segmented into the three streams - wet seal gas, dry seal gas, and bottom seal gas. The dry seal gas is distinguished from the wet seal gas in that the dry seal gas is passed through the seal gas dryer 20 (optionally with a bypass), while the bottom seal gas is further passed through the bottom seal gas compressor 22 and the bottom seal gas aftercooler 24. Here, the water delivered to the seal gas compressor 14 includes soft water delivered from one or more water softeners 30, and monitored by a calcium meter 32. A corrosion inhibitor injector 34 is fluidly coupled to the soft water stream and controlled by the DCS 36, which is in communication with the corrosion inhibitor injector 34.

Functionally, the critical variable which monitors the corrosive nature of the CO₂ gas laden water - pH - is reliable, and effective in the environment which heretofore did not exist. A pH probe 38 monitors incoming water pH used in the SGC 14. With DCS control, the proper level of corrosion/scale inhibitor injection into the water stream can be accomplished. The incoming pH range is shown in the Table 3 below, which also references the range which the process is maintained.

**Table 3 - Incoming pH Water Stream**

| Incoming pH without treatment | Incoming pH with treatment | Lower acceptable limit | Upper acceptable limit |
|---|---|---|---|
| 4.5 - 6.0 | 7.8 - 9.0 | 7.5 | 10.0 |

In order to ensure incoming flue gas CO₂ levels are adjusted throughout the process, a secondary pH monitor 40 on the SGC drain is utilized. The discharge pH is in the ranges shown in Table 4.

**Table 4 - Discharge pH Water Stream**

| Discharge pH without treatment | Discharge pH with treatment | Lower acceptable limit | Upper acceptable limit |
|---|---|---|---|
| 5.5 - 6.0 | 8.2 - 9.0 | 7.8 | 9.5 |

This second probe 40 is incorporated into a compressor discharge drain sufficient in capacity to enable the probe 40 to have a continuous stream of discharge water moving throughout the process. The pH probes 38,40 are integrated into the DCS system 36 so that upper and lower acceptable ranges pH can be maintained. The control of the pH is enabled by a DCS signal to the chemical feed pump 42 based upon continuous monitoring.

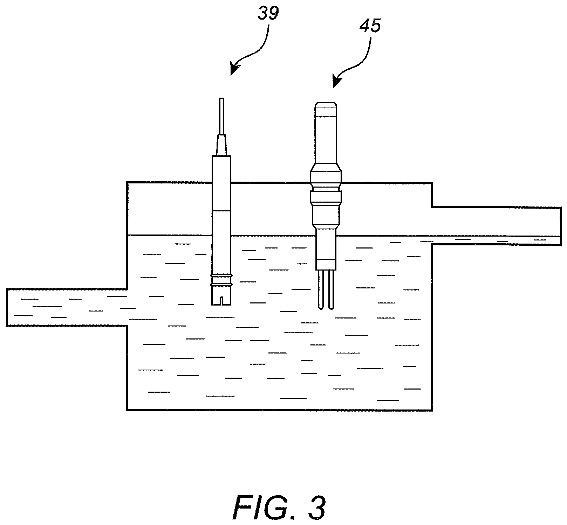

The corrosion control methodology of the present disclosure differs from current practices due to the use of multiple functionality corrosion inhibitors. As illustrated in FIG. 3, the corrater probe 45 is disposed adjacent to the pH probe 39 of one of the pH monitors 40. The corresponding treatment 34 includes film forming, vapor phase, and surface-active chemistries fed into the entry water stream of the SGC 14 along with the pH adjustment 42. The chemical dosing is predicated on the make-up water source, and the system 10 uses a real time corrater 44 at the discharge of the SGC 14 to determine the corrosion rate in mpy. Additionally, a corrosion rack 46 with standard 1018 steel coupons or the like is evaluated every 45 days (using the ASTM D4778 - 15 test method), for example, as a redundant test. The corrosion rate limits applied are provided in Table 5.

**Table 5 - Corrosion Rates**

| Corrosion rate without chemical treatment | Corrosion Rate with chemical treatment | Lower acceptable limit | Upper acceptable limit |
|---|---|---|---|
| > 20mpy | 0.1 - 1.0mpy | NA | 2.0 mpy |

The corrater probe 45 is located adjacent to the pH probe 39 and likewise wired to the DCS 36 (FIG. 2). The corrater 44 (FIG. 2) has an upper corrosion rate established for optimal control. It is not required to have a lower limit, as the process objective is to minimize corrosion. At any point when the corrosion rate exceeds 2.0mpy, the chemical feed pump 34 (FIG. 2) with a signal from the DCS 36 increases feed until the rate drops down below 1.0mpy, for example.

Thus, the use of a reliable pH probe to control such a process has not been done before. The present disclosure incorporates the following unique features into a probe that can now be used in this environment with high reliability and accuracy. These probe features are listed below:
- Glass formulation is environmentally appropriate,
- Chemically designed to withstand the environment, resulting in chemical and wear resistance.
- Resistant to aggressive gases,
- Resistant to abrasion and high velocity solids,
- Electronic transmission function,
- Solid state construction is completely sealed and customized to the environment,
- No internal O-rings are used as these degrade and are prone to failure,
- No gels or electrolytes as these can easily contaminate and increase maintenance,
- Extremely large surface area reduces fouling and improves reliability,
- Glass characteristics result in very low drift and reliable readings over prolonged periods - 2-4 weeks, with no daily adjustment required,
- Glass construction is highly durable, and
- Double and triple junction construction provides long life.

Thus, reliable pH monitoring enables reformer flue gas cooling water to be correctly buffered to prevent corrosion and scaling conditions from occurring. Real time monitoring via the DCS enables pH buffering to be adjusted as needed. The redundant monitoring feature on the discharge of the compressor will ensures pH control and that buffering is not under or over fed. Chemical corrosion control is effectively maintained as the correct pH of the water enables the corrosion control products to be utilized at the proper pH - efficacy of treatment is enhanced. Corrosion rates (and thereby the efficacy) are monitored and controlled through the DCS and ensure that desired results are achieved within the desired ranges. Corrosion control uses vapor phase, film forming, and surface acting inhibitors so the compressor and downstream processes (prior to the dryers) are enhanced and a protective layer is formed and maintained. Vapor phase control ensures that water droplets in the seal gas do not cause further corrosion prior to the dryer. All the aerosol water droplets that leave the gas phase (i.e., condense) deposit with a neutral pH, thereby reducing the corrosive nature of the water. As a result of all this, the seal gas compressor and sundry equipment operate more reliably and result in optimized production because maintenance and repairs caused by corrosion or scale build up are eliminated.

Although the present disclosure is illustrated and described herein with reference to preferred embodiments and specific examples thereof, it will be readily apparent to those of ordinary skill in the art that other embodiments and examples may perform similar functions and/or achieve like results. All such equivalent embodiments and examples are within the scope of the present disclosure, are contemplated thereby, and are limited by the following claims for all purposes.

## Claims

1. A system for operating a seal gas compressor utilized in a direct reduction process, the system comprising:
a Distributed Control System;
one or more pH probes coupled to the Distributed Control System and operable for monitoring a pH level of a water stream used in the seal gas compressor, wherein the pH level of the water stream is affected by a reformer flue gas stream that comes into contact with the water stream, wherein the monitoring is carried out at one or more locations upstream of the seal gas compressor and downstream of the seal gas compressor;
a pH adjusting chemical injector coupled to the Distributed Control System and operable for adjusting the pH level of the water stream to maintain the pH level of the water stream within a predetermined range based on feedback from the one or more pH probes at the direction of the Distributed Control System:
a corrater probe coupled to the Distributed Control System and operable for monitoring a corrosiveness of the water stream used in the seal gas compressor, wherein the corrosiveness of the water stream is affected by the reformer flue gas stream that comes into contact with the water stream, and
a corrosiveness chemical injector coupled to the Distributed Control System and operable for delivering one or more of a film forming, vapor phase, and electrochemical corrosive treatment program to the water stream and adjusting the corrosiveness of the water stream to maintain the corrosiveness of the water stream within a predetermined range based on feedback from the monitoring step.

2. The system of claim 1, wherein one of the one or more pH probes is collocated with the corrater probe.

3. A method for operating a seal gas compressor utilized in a direct reduction process, the method comprising:
monitoring a pH level of a water stream used in the seal gas compressor, wherein the pH level of the water stream is affected by a reformer flue gas stream that comes into contact with the water stream, wherein the monitoring step is carried out at one or more locations upstream of the seal gas compressor and downstream of the seal gas compressor; and
adjusting the pH level of the water stream to maintain the pH level of the water stream within a predetermined range based on feedback from the monitoring step
monitoring the corrosiveness of the water stream used in the seal gas compressor, wherein the corrosiveness of the water stream is affected by the reformer flue gas stream that comes into contact with the water stream; and
adjusting the corrosiveness of the water stream by delivering one or more of a film forming, vapor phase, and electrochemical treatment to the water stream to maintain the corrosiveness of the water stream within a predetermined range based on feedback from the monitoring step.

4. The method of claim 3, further comprising maintaining the pH level of the water stream upstream of the seal gas compressor in a range between 7.5 and 10.

5. The method of any of claims 3 or 4, further comprising maintaining the pH level of the water stream downstream of the seal gas compressor in a range between 7.8 and 9.5.

6. The method of any of claims 3 to 5, wherein adjusting the pH level of the water stream comprises injecting a pH adjusting chemical into the water stream based on the feedback from the monitoring step.

7. The method of any of claims 3 to 6, further comprising maintaining the corrosiveness of the water stream in a range under 0 . 0 5 0 mm per year (2.0 mpy).

8. The method according to any of claims 3 to 7 wherein the method is performed by utilizing the system according to any of claims 1 or 2.

9. A direct reduction system, comprising:
a furnace;
a seal gas compressor operable for delivering seal gas to the furnace;
a reformer operable for delivering a reformer flue gas stream to the seal gas compressor;
a system for operating a seal gas compressor according to any of claims 1 or 2.

10. The method according to any of claims 3 to 7 by utilizing the direct reduction system according to claim 9.

## Patentansprüche

1. System zum Betreiben eines Dichtgaskompressors, der in einem direkten Reduktionsverfahren verwendet wird, wobei das System umfasst:
ein Prozessleitsystem;
eine oder mehrere pH-Sonden, die an das Prozessleitsystem gekoppelt sind und so betrieben werden können, dass sie einen pH-Wert eines in dem Dichtgaskompressor verwendeten Wasserstroms überwachen, wobei der pH-Wert des Wasserstroms durch einen Reformer-Rauchgasstrom beeinflusst wird, der mit dem Wasserstrom in Kontakt kommt, wobei das Überwachen an einer oder mehreren Stellen vor dem Dichtgaskompressor und hinter dem Dichtgaskompressor durchgeführt wird;
einen pH-einstellenden Chemikalieninjektor, der an das Prozessleitsystem gekoppelt ist und so betrieben werden kann, dass der pH-Wert des Wasserstroms auf der Basis einer Rückmeldung von der einen oder den mehreren pH-Sonden und auf Anweisung des Prozessleitsystems so eingestellt wird, dass der pH-Wert des Wasserstroms innerhalb eines vorbestimmten Bereichs gehalten wird;
eine Corrater-Sonde, die an das Prozessleitsystem gekoppelt ist und so betrieben werden kann, dass sie die Korrosivität des in dem Dichtgaskompressor verwendeten Wasserstroms überwacht, wobei die Korrosivität des Wasserstroms durch einen Reformer-Rauchgasstrom beeinflusst wird, der mit dem Wasserstrom in Kontakt kommt; und
einen Antikorrosionschemikalieninjektor, der an das Prozessleitsystem gekoppelt ist und so betrieben werden kann, dass eine oder mehrere Filmbildungs-, Dampfphasen- und/oder elektrochemischen Antikorrosionsbehandlungsprogramm dem Wasserstrom bereitgestellt wird und die Korrosivität des Wasserstroms so eingestellt wird, dass die Korrosivität des Wasserstroms innerhalb eines vorbestimmten Bereichs auf Basis einer Rückmeldung aus dem Überwachungsschritt gehalten wird.

2. System gemäß Anspruch 1, wobei sich eine der einen oder der mehreren pH-Sonden an derselben Stelle wie die Corrater-Sonde befindet.

3. Verfahren zum Betreiben eines Dichtgaskompressors, der in einem direkten Reduktionsverfahren verwendet wird, wobei das Verfahren umfasst:
Überwachen eines pH-Werts eines in dem Dichtgaskompressor verwendeten Wasserstroms, wobei der pH-Wert des Wasserstroms durch einen Reformer-Rauchgasstrom beeinflusst wird, der mit dem Wasserstrom in Kontakt kommt, wobei der Schritt des Überwachens an einer oder mehreren Stellen vor dem Dichtgaskompressor und hinter dem Dichtgaskompressor durchgeführt wird; und
Einstellen des pH-Werts des Wasserstroms auf der Basis einer Rückmeldung aus dem Überwachungsschritt in einer solchen Weise, dass der pH-Wert des Wasserstroms innerhalb eines vorbestimmten Bereichs gehalten wird;
Überwachen der Korrosivität des in dem Dichtgaskompressor verwendeten Wasserstroms, wobei die Korrosivität des Wasserstroms durch den Reformer-Rauchgasstrom beeinflusst wird, der mit dem Wasserstrom in Kontakt kommt; und
Einstellen der Korrosivität des Wasserstroms durch die Bereitstellung einer oder mehrerer Filmbildungs-, Dampfphasen- und/oder elektrochemischen Behandlung des Wasserstroms, so dass die Korrosivität des Wasserstroms innerhalb eines vorbestimmten Bereichs auf Basis einer Rückmeldung aus dem Überwachungsschritt gehalten wird.

4. Verfahren gemäß Anspruch 3, weiterhin umfassend Aufrechterhalten des pH-Werts des Wasserstroms vor dem Dichtgaskompressor in einem Bereich von 7,5 bis 10.

5. Verfahren gemäß einem der Ansprüche 3 oder 4, weiterhin umfassend Aufrechterhalten des pH-Werts des Wasserstroms hinter dem Dichtgaskompressor in einem Bereich von 7,8 bis 9,5.

6. Verfahren gemäß einem der Ansprüche 3 bis 5, wobei das Einstellen des pH-Werts des Wasserstroms das Injizieren eines pH-regulierenden Chemikalie in den Wasserstrom auf der Basis der Rückmeldung aus dem Überwachungsschritt umfasst.

7. Verfahren gemäß einem der Ansprüche 3 bis 6, weiterhin umfassend das Aufrechterhalten der Korrosivität des Wasserstroms in einem Bereich unter 0,050 mm pro Jahr (2,0 mpy).

8. Verfahren gemäß einem der Ansprüche 3 bis 7, wobei das Verfahren unter Verwendung des Systems gemäß einem der Ansprüche 1 oder 2 durchgeführt wird.

9. System zur direkten Reduktion (DRI), umfassend:
einen Ofen;
einen Dichtgaskompressor, der so betrieben werden kann, dass er dem Ofen Dichtgas zuführt;
einen Reformer, der so betrieben werden kann, dass er dem Dichtgaskompressor einen Reformer-Rauchgasstrom zuführt;
ein System zum Betreiben eines Dichtgaskompressors gemäß einem der Ansprüche 1 oder 2.

10. Verfahren gemäß einem der Ansprüche 3 bis 7 unter Verwendung des System zur direkten Reduktion gemäß Anspruch 9.

## Revendications

1. Système pour faire fonctionner un compresseur de gaz d'étanchéité utilisé dans un procédé de réduction directe, ledit système comprenant :
un système numérique de contrôle-commande,
une ou plusieurs sondes de pH couplées au système numérique de contrôle-commande et capable de fonctionner pour surveiller le niveau de pH d'un cours d'eau utilisé dans ledit compresseur de gaz d'étanchéité, dans lequel le niveau de pH du courant d'eau est affecté par le courant de gaz de carneau provenant d'un reformeur qui vient en contact avec le courant d'eau, dans lequel l'étape de surveillance est effectuée en amont du compresseur de gaz d'étanchéité et/ou en aval du compresseur,
un injecteur de produit chimique à ajustement de pH couplé au système numérique de contrôle-commande et capable de fonctionner pour ajuster le niveau de pH dudit courant d'eau pour maintenir le niveau de pH dudit courant d'eau dans une gamme prédéterminée, sur la base de rétroaction de la part desdites une ou plusieurs sondes de pH à la direction du système numérique de contrôle-commande.
une sonde de corrosivité couplée au système numérique de contrôle-commande et capable de fonctionner pour surveiller la corrosivité du cours d'eau utilisé dans ledit compresseur de gaz d'étanchéité, dans lequel la corrosivité du courant d'eau est affectée par le courant de gaz de carneau provenant d'un reformeur qui vient en contact avec le courant d'eau, et
un injecteur de produit chimique de corrosivité couplé au système numérique de contrôle-commande et capable de fonctionner pour délivrer l'un ou plusieurs parmi les programmes de formation de film, de phase vapeur, et de traitement de corrosivité électrochimique au courant d'eau, et ajuster la corrosivité dudit courant d'eau pour maintenir la corrosivité du courant d'eau dans une gamme prédéterminée, sur la base de rétroaction de la part de l'étape de surveillance.

2. Système selon la revendication 1, dans lequel une desdites une ou plusieurs sondes de pH est colocalisée avec la sonde de corrosivité.

3. Procédé pour faire fonctionner un compresseur de gaz d'étanchéité utilisé dans un procédé de réduction directe, ledit procédé comprenant les étapes consistant à
surveiller le niveau de pH d'un cours d'eau utilisé dans ledit compresseur de gaz d'étanchéité, dans lequel le niveau de pH dudit cours d'eau est affecté par un courant de gaz de carneau provenant d'un reformeur, qui vient en contact avec le courant d'eau, dans lequel l'étape de surveillance est effectuée en amont du compresseur de gaz d'étanchéité et/ou en aval du compresseur de gaz d'étanchéité, et
ajuster le niveau de pH dudit courant d'eau pour maintenir le niveau de pH dudit courant d'eau dans une gamme prédéterminée, sur la base de rétroaction de la part de l'étape de surveillance,
surveiller la corrosivité du courant d'eau utilisé dans le compresseur de gaz d'étanchéité, dans lequel la corrosivité du courant d'eau est affectée par le courant de gaz de carneau provenant d'un reformeur qui vient en contact avec le courant d'eau, et
ajuster la corrosivité dudit courant d'eau pour délivrer l'un ou plusieurs parmi les programmes de formation de film, de phase vapeur, et de traitement de corrosivité électrochimique au courant d'eau pour maintenir la corrosivité du courant d'eau dans une gamme prédéterminée, sur la base de rétroaction de la part de l'étape de surveillance.

4. Procédé selon la revendication 3, comprenant en outre l'étape consistant à maintenir le niveau du pH du courant d'eau en amont du compresseur de gaz d'étanchéité dans une gamme comprise entre 7,5 et 10.

5. Procédé selon l'une quelconque des revendications 3 ou 4, comprenant en outre l'étape consistant à maintenir le niveau du pH du courant d'eau en aval du compresseur de gaz d'étanchéité dans une gamme comprise entre 7,8 et 9,5.

6. Procédé selon l'une quelconque des revendications 3 à 5, dans lequel l'ajustage du niveau du pH du courant d'eau comprend l'étape consistant à injecter un produit chimique à ajustement de pH dans le courant d'eau, sur la base de rétroaction de la part de l'étape de surveillance.

7. Procédé selon l'une quelconque des revendications 3 à 6, comprenant en outre l'étape consistant à maintenir la corrosivité du courant d'eau dans une gamme inférieure à 0,050 mm par année (2,0 mils/année).

8. Procédé selon l'une quelconque des revendications 3 à 7, dans lequel ledit procédé est effectué en utilisant le système selon l'une quelconque des revendications 1 ou 2.

9. Système de réduction directe, comprenant :
un fourneau,
un compresseur de gaz d'étanchéité capable de fonctionner pour délivrer du gaz d'étanchéité au fourneau,
un reformeur capable de fonctionner pour délivrer un courant de gaz de carneau provenant du reformeur au compresseur de gaz d'étanchéité,
un système pour faire fonctionner un compresseur de gaz d'étanchéité selon l'une quelconque des revendications 1 ou 2.

10. Procédé selon l'une quelconque des revendications 3 à 7 en utilisant le système de réduction directe selon la revendication 9.
